# EUROPEAN PATENT APPLICATION

(11) **EP 4 792 981 A1**
(43) Date of publication of application: **19.08.2026**
(21) Application number: 26158394.2
(22) Date of filing: 13.02.2026
(51) Int. Cl.: B25B 23/142

(54) **TORQUE WRENCH**

(30) Priority: 14.02.2025 US 202519053591
(71) Applicant: Stanley Black & Decker MEA FZE, Dubai (AE)
(72) Inventor: CHEN, Ko Han, 407 Taichung (TW); WU, Yen Ting, 33445 Taoyuan City (TW); CHEN, Chia Cheng, 413 Taichung City (TW)
(74) Representative: Gill Jennings & Every LLP

(57) **Abstract**

A torque wrench includes a sensor and at least one processing circuit coupled to the sensor. The at least one processing circuit is configured to determine a torque setting value, determine a torque threshold based on the torque setting value, determine a current torque output value of the torque wrench based on a signal from the sensor, and compare the current torque output value to the torque threshold. The at least one processing circuit is also configured to increment a calibration count responsive to determining that the current torque output value exceeds the torque threshold and provide a first indication to a user regarding the calibration count exceeding the calibration threshold of the torque wrench responsive to determining that the calibration count exceeds the calibration threshold.

## Description

### TECHNICAL FIELD

The present disclosure relates generally to a torque wrench (e.g., an electromechanical torque wrench).

### BACKGROUND

A conventional torque wrench is calibrated during manufacturing. After the torque wrench is sold, it is used and the torque wrench may benefit from recalibration after a certain number of uses. However, recalibration is rarely performed because it is difficult to determine when recalibration may be beneficial.

### SUMMARY

In various embodiments, a torque wrench includes a sensor and at least one processing circuit coupled to the sensor. The at least one processing circuit is configured to determine a torque setting value, determine a torque threshold based on the torque setting value, determine a current torque output value of the torque wrench based on a signal from the sensor, and compare the current torque output value to the torque threshold. The at least one processing circuit is also configured to increment a calibration count responsive to determining that the current torque output value exceeds the torque threshold and provide a first indication to a user regarding the calibration count exceeding the calibration threshold of the torque wrench responsive to determining that the calibration count exceeds the calibration threshold.

In various embodiments, a method for operating a torque wrench having a sensor and at least one processing circuit coupled to the sensor includes receiving, by the at least one processing circuit, the at least one processing circuit of the torque wrench, a torque setting value. The method also includes determining, by the at least one processing circuit, a torque threshold based on the torque setting value, determining, by the at least one processing circuit, a current torque output value of the torque wrench, comparing, by the at least one processing circuit, the current torque output value to the torque threshold, incrementing, by the at least one processing circuit, a calibration count responsive to determining that the current torque output value exceeds the torque threshold, comparing, by the at least one processing circuit, the calibration count to a calibration threshold, determining, by the at least one processing circuit, that the calibration count exceeds the calibration threshold, and responsive to determining that the calibration count exceeds the calibration threshold, providing, by the at least one processing circuit, an indication to a user regarding the calibration count exceeding the calibration threshold.

In various embodiments, a torque wrench includes a handle, an output shaft assembly including a spring, a sensor to provide a signal associated with force provided by the spring, and at least one processing circuit coupled to the sensor. The output shaft assembly is coupled to the handle to facilitate compression of the spring relative to the handle The at least one processing circuit configured to determine a torque setting value based on the signal, determine a torque threshold based on the torque setting value, determine a current torque output value of the torque wrench based on a signal from the sensor, compare the current torque output value to the torque threshold, and responsive to determining that the current torque output value exceeds the torque threshold, increment a calibration count. The at least one processing circuit is also configured to compare the calibration count to a calibration threshold and responsive to determining that the calibration count exceeds the calibration threshold, provide an indication to a user regarding the calibration count exceeding the calibration threshold.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

### BRIEF DESCRIPTION OF THE DRAWINGS

The disclosure will become more fully understood from the following detailed description, taken in conjunction with the accompanying Figures, in which like reference numerals refer to like elements unless otherwise indicated, in which:
Figure 1 is a top view of an example torque wrench;
Figure 2 is an exploded view of the torque wrench shown in Figure 1;
Figure 3 is a cross-sectional view of the torque wrench shown in Figure 1 taken along plane A-A;
Figure 4 is a cross-sectional view of the torque wrench shown in Figure 1 taken along plane B-B;
Figure 5 is a perspective view of a portion of another example torque wrench with a knob in a first knob position;
Figure 6 is an example schematic of the torque wrench of Figure 1 showing a processing circuit of the torque wrench;
Figure 7 depicts an example method for operating the torque wrench of Figure 1;
Figure 8 depicts another example method for operating the torque wrench of Figure 1;
Figure 9 is a graph showing a change in a current torque output value over time, according to one embodiment;
Figure 10 is a graph showing a change in a current torque output value, according to one embodiment;
Figure 11 is a view of an example display for the torque wrench shown in Figure 1;
Figure 12 is a view of another example display for the torque wrench shown in Figure 1;
Figure 13 is a view of another example display for the torque wrench shown in Figure 1; and
Figure 14 is a view of another example display for the torque wrench shown in Figure 1.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRIPTION

Following below are more detailed descriptions of various concepts related to, and implementations of a torque wrench that provides an indication to a user associated with calibration of the torque wrench and methods of operating such a torque wrench. The various concepts introduced above and discussed in greater detail below may be implemented in any of a number of ways, as the described concepts are not limited to any particular manner of implementation. Examples of specific implementations and applications are provided primarily for illustrative purposes.

### I. Overview

A torque wrench uses a sensor to obtain a measurement of a torque applied by the torque wrench. A user of the torque wrench relies upon the measurement being accurate. The torque wrench is often calibrated during manufacturing to ensure initial accuracy of the measurement. In some situations, use of the torque wrench may degrade accuracy of the measurement of time. As a result, a torque wrench that has been used many times may no longer obtain an accurate measurement of the torque.

Conventionally, a user may periodically recalibrate a torque wrench. However, because there is no mechanism for determining how many uses of a torque wrench may have degraded accuracy of the measurement, the user has no way of knowing when recalibration is desirable. Recalibration of a torque wrench typically involves the user providing the torque wrench to a manufacturer, the manufacturer performing the recalibration, and the manufacturer providing the torque wrench back to the user after the recalibration has been performed. This process is time consuming and often discourages users from recalibrating their torque wrenches. As a result, many users may be using torque wrenches in need of calibration. Use of such torque wrenches can damage fasteners due to application of too much, or too little, torque to the fasteners by the torque wrench.

Implementations described herein are related to a torque wrench having at least one processing circuit and a sensor. The at least one processing circuit is configured to determine a torque setting value and determine a torque threshold based on the torque setting value. The at least one processing circuit then determines a current torque output value and increments a calibration count in response to the current torque output value exceeding the torque threshold. When the calibration count exceeds a calibration threshold, the at least one processing circuit provides an indication to the user. The torque wrench described herein enhances user awareness regarding when performing calibration of the torque wrench is desirable.

### II. Overview of Example Torque Wrenches

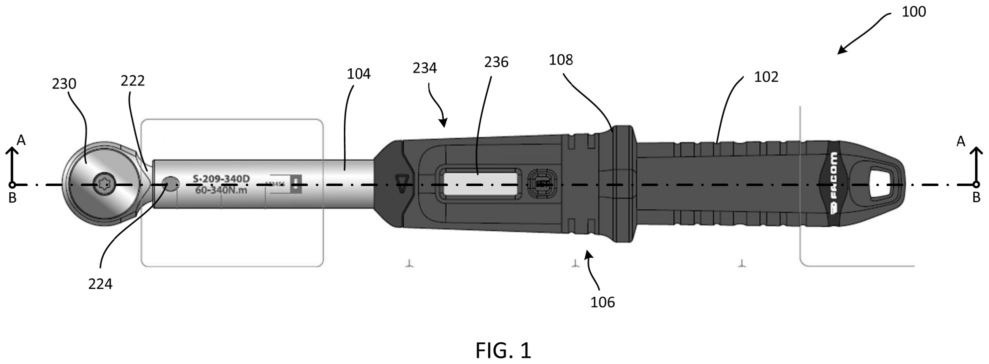

Figure 1 depicts a torque wrench 100 (e.g., a mechanical torque wrench, an electromechanical torque wrench, etc.). The torque wrench 100 may be used to tighten a component (e.g., nut, bolt, fastener, screw, etc.) to a desired torque. This may be useful where, for example, correct installation of the component requires tightening the component to a desired torque. The desired torque may, for example, be prescribed in a specification or product manual.

As is described in more detail herein, the user sets the torque wrench to a torque setting associated with the desired torque. This may be done by rotation of a knob of the torque wrench, for example. In many instances, the torque setting may be the same as the desired torque. The torque wrench 100 determines a torque setting value based on the torque setting set by the user, and then determines a torque threshold based on the torque setting value. The torque threshold includes the torque setting value and an amount of additional torque that can be desirably applied by the torque wrench 100 without undesirably impacting calibration of the torque wrench 100. The torque wrench 100 then compares a current torque output value of the torque wrench to the torque threshold to determine if operation of the torque wrench may have undesirably impacted calibration of the torque wrench 100.

The torque wrench 100 includes a handle 102 (e.g., grip, etc.). A user of the torque wrench 100 may engage with (e.g., grasp, etc.) the handle 102 to tighten (e.g., adjust, torque down, etc.) the component until the current torque output value of the torque wrench 100 reaches the torque threshold of the torque wrench 100. In various embodiments, as described herein, the torque wrench 100 may include a display that displays the torque setting value. The handle 102 may facilitate locking of the torque wrench at the torque setting value (e.g., after rotation of the knob sets the torque setting value, etc.).

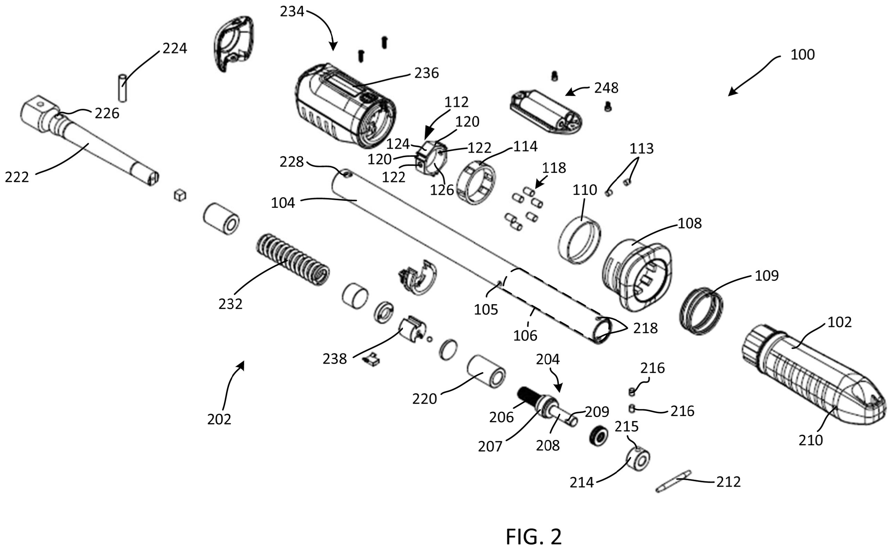

The torque wrench 100 also includes a center shaft 104 (e.g., central portion, centrally disposed member, etc.). The center shaft 104 includes a center shaft interior portion 106 that is disposed within the handle 102. The center shaft 104 may be manufactured from a metal or primarily metal-based material (e.g., steel or aluminum), in some embodiments. In various embodiments, as shown in Figures 1 and 2, the center shaft 104 is a tube (pipe, etc.) that defines a cavity for receiving one or more components. In the example shown, the center shaft is a straight tube (i.e., substantially not bent or curved). However, the center shaft 104 may also include a portion that is angled or curved to provide enhanced comfort and/or control during use of the torque wrench 100.

The torque wrench 100 also includes a knob 108 (e.g., collar, etc.). The knob 108 is operable between a first knob position and a second knob position. In the first knob position, the knob 108 is configured to rotate with the handle 102. In other words, in the first knob position, the knob 108 is coupled to the handle 102 such that movement of the knob 108 causes movement of the handle 102. This enables adjustment of the torque setting valve in the first knob position. In the second knob position, the knob 108 is configured to not rotate with the handle 102. As a result, the torque setting value cannot be adjusted in the second knob position.

In various embodiments, the torque wrench 100 also includes a knob spring 109. The knob spring 109 is positioned between the handle 102 and the knob 108. The knob spring 109 biases the knob 108 to the second knob position and resists movement of the knob 108 from the second knob position to the first knob position such that a force by a user of the torque wrench 100 is required to move the knob 108 from the second knob position to the first knob position. In this way, the knob spring 109 mitigates unintentional adjustment of the torque setting value.

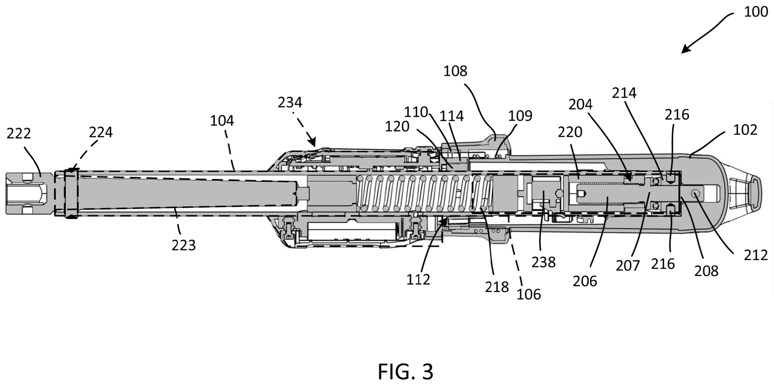

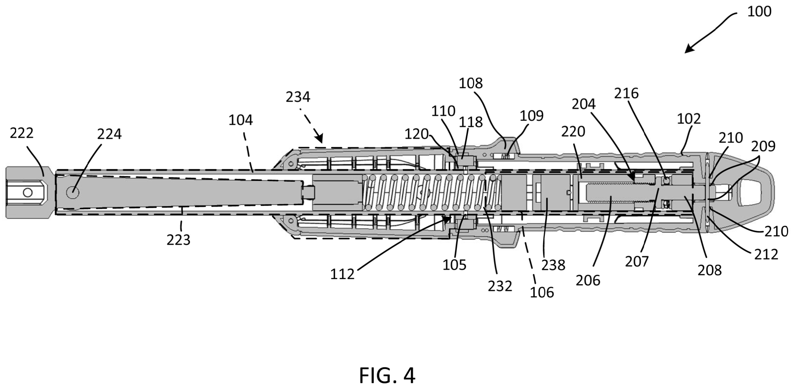

The torque wrench 100 also includes a ring 110 (e.g., sleeve, cylindrical or circular-shaped member, etc.). The ring 110 is coupled to the knob 108. In various embodiments, as shown in Figures 3 and 4, the ring 110 is disposed within the knob 108. For example, the ring 110 may be press fit (e.g., via an interference fit, etc.) into the knob 108. The ring 110 may have a smooth inner circumferential surface (e.g., a surface with a constant diameter, etc.). In various embodiments, the ring 110 is made from metal (e.g., aluminum, steel, etc.). In various embodiments, the retainer 114 is annular.

The torque wrench 100 also includes a guide 112. The guide 112 is coupled to the center shaft 104 such that movement of the guide 112 causes movement of the center shaft 104. In some embodiments, the center shaft 104 has a set of openings 105 and the guide 112 is coupled to the center shaft 104 using pins 113 extending through the openings 105 into the center shaft 104 into openings 122 in the guide 112, as shown in Figure 2 and 4. In various embodiments, such as is shown in Figure 2, the guide 112 has an outer surface formed from a plurality of intersecting flat surfaces 124 (e.g., a hexagonal outer surface, etc.) and a cylindrical inner surface 126. In various embodiments, the guide 112 is made from metal.

The torque wrench 100 also includes a retainer 114. The retainer 114 is positioned at least partly around the guide 112. The retainer 114 facilitates movement of the ring 110 relative to the guide 112. In various embodiments, the retainer 114 is annular. The retainer 114 may have a cylindrical inner surface and a cylindrical outer surface. The retainer 114 includes a plurality of apertures 117 (e.g., openings, etc.). In some embodiments, the retainer 114 includes the same number of the apertures 117 as the guide 112 includes flat surfaces. Additionally, the retainer 114 may be configured such that each of the apertures 117 may be located over one of the flat surfaces of the guide 112. In various embodiments, the retainer 114 is made from metal.

The torque wrench 100 also includes at least one roller 118 (e.g., bearing, etc.). Each of the rollers 118 is disposed in one of the apertures 117 and captured between or substantially between the guide 112 and the ring 110. In various embodiments, the torque wrench 100 includes the same number of the rollers 118 as the apertures 117 of the retainer 114. The rollers 118 are positioned within the apertures 117 such that a portion of each of the rollers 118 protrudes outwards from the retainer 114, as shown in Figure 4. As a result, the rollers 118 are configured to separate the retainer 114 from the ring 110. The rollers 118 are configured to facilitate selective movement of the ring 110 relative to the guide 112. In this way, the rollers 118 facilitate operation of the knob 108 in the first knob position and the second knob position.

The guide 112 includes at least one channel 120 (e.g., tunnel, etc.). Each of the channels 120 extends outward from an external surface of the guide 112. In some embodiments, each of the channels 120 extends outward from the external surface of the guide 112 between two of the rollers 118. The retainer 114 extends around each of the channels 120. Each of the channels 120 cooperates with the retainer 114 to define a tunnel (e.g., passage, etc.). The torque wrench 100 may include one or more wires (e.g., electrical wires, etc.) or other components that extend between the guide 112 and the retainer 114 through the tunnels. The tunnels facilitate routing of these wires through the torque wrench 100.

In the first knob position, at least a portion of the ring 110 is not compressing the rollers 118, which allows for rotation of the knob 108 and the handle 102 such that the knob 108 is rotatable relative to the handle 102. In the second knob position, as shown in Figures 3 and 4, the ring 110 compresses the rollers 118 against the guide 112 to resist movement of the ring 110 relative to the retainer 114 to restrict rotation of the knob 108 and the handle 102.

The torque wrench 100 also includes an output shaft assembly 202 to operate the torque wrench 100. A portion of the output shaft assembly 202 is disposed within the center shaft 104. The output shaft assembly 202 includes a coupler 204 that is partially disposed within the center shaft interior portion 106. The coupler 204 includes a post 208 that is coupled to the handle 102. At least a portion of the post 208 is not disposed in the center shaft interior portion 10,6 as shown in Figures 3 and 4.

In various embodiments, the post 208 is coupled to the handle 102 with a rod 212. The post 208 has two holes 209 and the handle 102 includes two corresponding holes 210. The rod 212 passes through the holes 209 and the holes 210, as shown in Figure 4 such that rotation of the handle 102 rotates the post 208.

The coupler 204 also includes a threaded shaft 206. The threaded shaft 206 is disposed within the center shaft interior portion 106. The threaded shaft 206 includes external threads on an exterior portion of the threaded shaft 206.

In various embodiments, as shown in Figures 2-4, the coupler 204 includes a flange 207. The flange 207 is positioned between the threaded shaft 206 and post 208. The flange 207 separates the threaded shaft 206 and the post 208. As is explained in more detail herein, the flange 207 presses against a spring to facilitate adjustment of the torque setting.

As shown in Figure 2, the output shaft assembly 202 also includes an inner ring 214 that is coupled to the center shaft 104. The inner ring 214 is passed through the post 208, as shown in Figures 3 and 4. In some embodiments, the inner ring 214 is coupled to the center shaft 104 with two plugs 216. In such embodiments, the inner ring 214 has two holes 215 and the center shaft 104 has two corresponding holes 218. Each of the plugs 216 passes through one of the holes 215 and one of the holes 218, as shown in Figure 3.

The output shaft assembly 202 also includes a threaded seat 220 that is disposed within the center shaft interior portion 106. The threaded seat 220 has a threaded opening that is threadably coupled to the threaded shaft 206, as shown in Figures 3 and 4. In various embodiments, the threaded seat 220 has internal threads that correspond with the external threads of the threaded shaft 206.

The output shaft assembly 202 also includes an output shaft 222 that is rotatably coupled to the center shaft 104. The output shaft 222 includes an output shaft interior portion 223 that is disposed within the center shaft 104. The output shaft interior portion 223 is disposed within a center shaft exterior portion of the center shaft 104. The center shaft exterior portion is not disposed within the handle 102, as shown in Figures 3 and 4. The output shaft 222 may be coupled to the center shaft 104 with a rod 224. The output shaft 222 has an opening 226 that corresponds with an opening 228 on the center shaft 104. The rod 224 passes through the opening 226 and the opening 228 to couple the output shaft 222 to the center shaft 104, as shown in Figure 3.

As shown in Figure 1, in various embodiments, the torque wrench 100 also includes a ratchet head 230. The output shaft 222 is coupled to the ratchet head 230. The ratchet head 230 may attach to a component to be fastened such that force by a user on the torque wrench 100 (e.g., on the handle 102) tightens the component. The ratchet head 230 may be a gear head, an open-end head, or another attachment tighten or loosen the component.

The output shaft assembly 202 also includes a spring 232, as shown in Figure 2. A portion of the spring 232 is disposed within the center shaft interior portion 106 and the spring 232 is positioned between the output shaft interior portion 223 and the threaded seat 220. A compression of the spring 232 is adjusted dependent on the torque setting of the torque wrench 100. Rotation of the handle 102 causes rotation of the post 208 and the coupler 204 relative to the center shaft 104 due to the rod 212. The rotation of the threaded shaft 206 leads to movement of the threaded seat 220 relative to the coupler 204, which changes a compression of the spring 232 (e.g., by increasing or decreasing compression of the spring). The change in compression of the spring determines the torque setting value as a resistance that must be overcome for the wrench to tighten a component such that a current torque output value reaches the torque setting value. The spring 232 plays a role in determining a torque range for the torque wrench 100. Stiffer springs can handle higher compression, therefore having higher torque values than softer springs. Varying thread pitch and thread length of the threaded shaft 206 and the threaded seat 220 affects how the compression of the spring 232 changes with rotation of the handle 102. For example, finer threads on the threaded shaft 206 and the threaded seat 220 may allow for more precise adjustments to the torque setting value in comparison to coarser threads.

The adjustments of the compression of the spring 232 (e.g., with the coupler 204, the threaded shaft 206, and the threaded seat 220) from rotating the handle 102 adjusts the torque setting value of the torque wrench 100. When a force is applied on the torque wrench 100 during use, the torque wrench 100 uses a sensor and the spring 232 to determine when a current torque output value, which corresponds to the force applied, exceeds the torque setting value. For example, when fastening a bolt, a user can adjust the handle 102 to set the torque wrench 100 to the torque setting value, couple the torque wrench 100 to the bolt, and apply force on the torque wrench 100 until the torque wrench 100 indicates (e.g., via a display, etc.) that the current torque output value exceeds the torque setting value.

Additionally, the output shaft assembly 202 may include other components (e.g., additional rings, screws, fasteners, etc.) to facilitate operation of the torque wrench 100. For example, in various embodiments, the output shaft assembly 202 may also include a bushing (e.g., a washer, etc.) disposed between the flange 207 and the inner ring 214.

In various embodiments, as is shown in Figure 1, the torque wrench 100 also includes a casing 234 that is positioned between the handle 102 and the output shaft 222. The casing 234 may house a number of components of the torque wrench 100, such as a battery system 248 (e.g., a power system, etc.) of the torque wrench 100. The battery system 248 may house one or more electrical storage devices (e.g., batteries, capacitators, etc.) that selectively provides power to one or more components (e.g., the electronic display described herein). The battery system 248 may be used to power electrical components of the torque wrench 100. Additionally, the casing 234 may include a display 236. As described herein, the display 236 is used to display information, such as a torque setting value, current torque output value, etc. The display 236 may display this information in real-time, such as while a user engages with the torque wrench 100.

The torque wrench 100 also includes a sensor 238. As shown in Figures 3 and 4, the sensor 238 may be positioned between the spring 232 and the threaded seat 220 such that a change in compression of the spring 232 during movement of the threaded seat 220 and operation of the torque wrench 100 is sensed by the sensor 238. In various embodiments, the sensor 238 includes a load cell, a force sensor, a torque sensor, a strain gauge, or other similar sensors. The load cell and the strain gauge may be used to measure force applied to the torque wrench 100, which can then be converted to torque to determine the current torque output value, for example. The sensor 238 contacts a portion of the output shaft assembly 202 and detects changes to the compression of the spring 232 to determine a current torque output value (e.g., when a user is using the torque wrench 100 to apply torque on a component, etc.). The sensor 238 is used to determine the torque setting value when a user sets the torque setting value with the handle 102. In various embodiments the sensor 238 may include a second sensor such that the sensor 238 is used to detect the torque setting value and the second sensor is used to detect the current torque output value applied to the torque wrench 100.

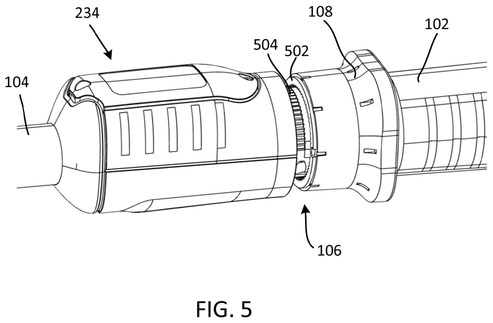

In various embodiments, as shown in Figure 5, the torque wrench 100 does not include the ring 110, the retainer 114, the rollers 118, or the guide 112. Instead, the torque wrench 100 includes a first gear 502 and a second gear 504. The first gear 502 is positioned around the center shaft 104 and coupled to the knob 508. The second gear 504 is positioned around the center shaft 104 and coupled to the casing 234. The first gear 502 includes a number of teeth (e.g., 60 teeth) and the second gear 504 corresponds to the first gear 502. In the first knob position, shown in Figure 5, the first gear 502 and the second gear 504 are not coupled and the knob 108 is rotatable relative to the handle 102. In the second knob position, the first gear 502 and the second gear 504 are coupled via an engagement of the teeth of the first gear 502 and the teeth of the second gear 504 such that rotation of the knob 108 and the handle 102 are restricted. The torque wrench 100 may also include a button, a dial, etc. to lock the handle 102 from rotation.

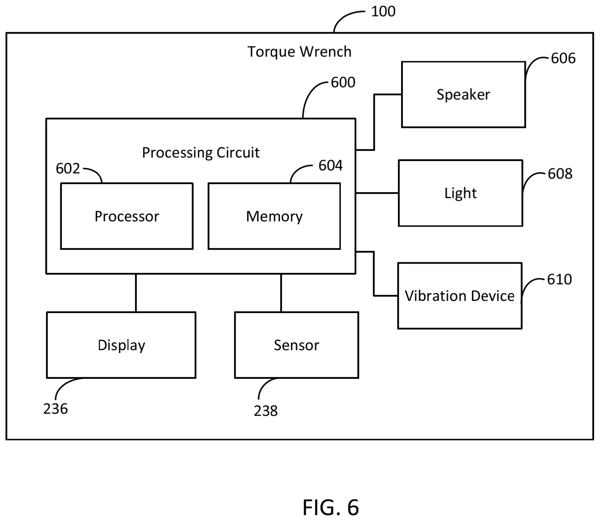

Figure 6 depicts an example schematic diagram of the at least one processing circuit 600 of the torque wrench 100 of FIG. 1. The torque wrench 100 includes at least one processing circuit 600 that is coupled (e.g., communicatively coupled) to the sensor 238. The processing circuit 600 may, generally, be used to receive inputs (e.g., signals, etc.) from the sensor 238 and perform various instructions according to these inputs. While one processing circuit 600 is shown, it is understood that the at least one processing circuit 600 may be similarly implemented across two or more processing circuits identical to the at least one processing circuit 600 as described herein.

The at least one processing circuit 600 includes a processor 602 and memory 604. The at least one processing circuit 600 may be implemented as a general-purpose processor, application specific integrated circuit ("ASIC"), one or more field programmable gate arrays ("FPGAs"), a digital-signal-processor ("DSP"), circuits containing one or more processing components, circuitry for supporting a microprocessor, a group of processing components, or other suitable electronic processing components. The at least one processing circuit 600 may include an ASIC, one or more FPGAs, a DSP, circuits containing one or more processing components, circuitry for supporting a microprocessor, a group of processing components, or other suitable electronic processing components. In some embodiments, the at least one processing circuit 600 is configured to execute computer code stored in the memory 604 to facilitate execution of the operations described herein.

The at least one processing circuit 600 is configured to determine a torque setting value. As described herein, the sensor 238 is configured to detect the torque setting value when a user adjusts the torque wrench 100. For example, the user can rotate the handle 102 to adjust the compression of the spring 232 and change the torque setting value, and the sensor 238 can use the adjustment to determine the torque setting value.

The display 236 is coupled to at least one processing circuit 600. The display 236 is configured to display information on the torque wrench 100. In various embodiments, the at least one processing circuit 600 is configured to provide a display signal to the display 236. The display signal includes information according to a state of the torque wrench 100. The display signal can cause the display 236 to depict the torque setting value.

With the torque setting value, the at least one processing circuit 600 can determine a torque threshold. The torque threshold may be a torque value associated with a point at which further operation of the torque wrench 100 may be undesirable.

In various embodiments, the torque threshold is a fixed value dependent on a maximum torque setting value of the torque wrench 100. For example, the torque wrench 100 may have a maximum torque setting value of 100 Nm and the torque threshold may be 105 Nm regardless of the torque setting value and whether it is or is not 100 Nm. For example, the torque threshold may also be dependent on a size of the torque wrench 100. In various embodiments, a larger torque wrench may have a greater torque threshold than a smaller torque wrench. This can be due to the larger torque wrench having a greater torque range and be intended for use with components designed to handle higher forces, resulting in a larger torque threshold needed to detect when an undesirable amount of torque is applied to the components.

Additionally, the torque threshold may be a torque value determined based on the torque setting value. For example, the torque threshold may be a predetermined value above the torque setting value (e.g., 5 Nm above the torque setting value).

In various embodiments, the torque threshold is a dynamically changing value based on the torque setting value such that the torque threshold is not fixed as the torque setting value is adjusted. The torque threshold can increase as a function of increasing the torque setting value. In such embodiments, the dynamically changing value may be between, for example, 105% of the torque setting value and 115% of the torque setting value, inclusive.

The at least one processing circuit 600 is also configured to determine a current torque output value of the torque wrench 100. As described herein in reference to the sensor 238, the at least one processing circuit 600 may receive a signal from the sensor 238 that corresponds to a current torque output value. The signal can be associated with the compression of the spring 232. For example, when torque is applied by the torque wrench 100 to a component, the spring 232 compresses, resulting in the sensor 238 detecting a force. The at least one processing circuit 600 determines the current torque output value based on the force.

The at least one processing circuit 600 is configured to compare the current torque output value to the torque threshold. This comparison aids in determining if the torque setting value is reached, if too much torque may be applied to the torque wrench 100, etc.

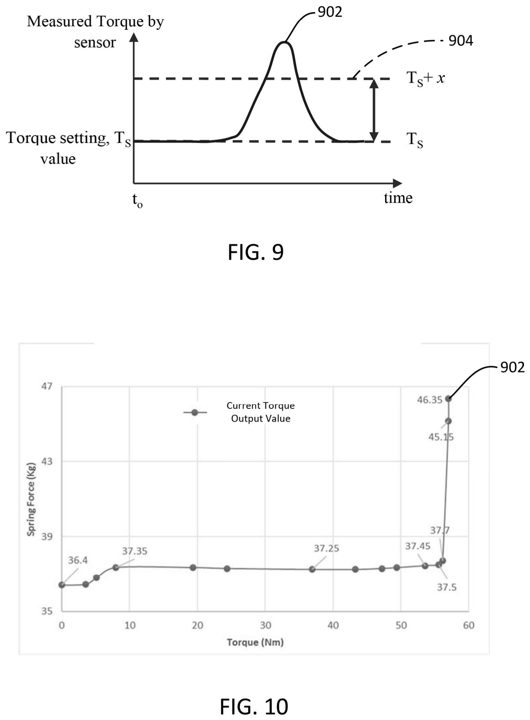

Figure 9 is a graph showing a change in the current torque output value, labelled as current torque output value 902, over time, according to one embodiment. The torque threshold, labelled as torque threshold 904, is determined based on the torque setting value. The graph shows the current torque output value 902 exceeding the torque threshold 904 at a time. As is described in more detail herein, the at least one processing circuit 600, at the time, increments a calibration account associated with undesirable operation of the torque wrench 100.

Figure 10 is an example graph showing a change in the current torque output value 902 based on a force detected by the sensor 238. A spike in the graph at a spring force value of 46.35 corresponds to the current torque output value 902 exceeding the torque threshold 904.

In response, to the current torque output value exceeding the torque threshold, a calibration count is incremented by the at least one processing circuit 600. The calibration count represents a number of times that the current torque output value has exceeded the torque threshold. In various embodiments, the display 236 is configured to display (e.g., selectively display) the calibration count. Using the displayed calibration count, a user may determine that recalibration of the torque wrench 100 is desirable.

A calibration threshold defines a number of times the current torque output value exceeded the torque threshold after which action (e.g., calibration of the torque wrench 100, servicing of the torque wrench 100, replacement of the torque wrench 100, etc.) is desirable. The calibration threshold may be predetermined by a manufacturer of the torque wrench 100 or be set by a user. For example, the calibration threshold may be 5000, such that once the calibration count reaches 5000, the action is desirable. The at least one processing circuit 600 is configured to compare the calibration count to the calibration threshold to determine when the calibration count exceeds the calibration threshold.

In response to the calibration count exceeding the calibration threshold, the at least one processing circuit 600 is configured to provide a first indication to a user of the torque wrench 100. The first indication is in regard to the calibration count exceeding the calibration threshold of the torque wrench 100. For example, the first indication may indicate to the user that the action is desirable.

In various embodiments, the first indication is at least one of an audio signal (e.g., beeping, a sound, a click, etc.), a visual signal, or a tactile signal (e.g., vibration, vibration pattern). The torque wrench 100 may include a speaker 606 such that when the at least one processing circuit 600 determines that the calibration count exceeds the calibration threshold, the at least one processing circuit 600 causes a signal to be sent to the speaker 606 to emit a noise. In another example, the at least one processing circuit 600 may cause a signal to be sent to the display 236 such that information relating to the calibration count exceeding the calibration threshold can be displayed on the display 236. Additionally, in various embodiments, the torque wrench 100 includes a light 608 and the at least one processing circuit 600 causes a signal to be sent to the light 608 to provide the first indication. In another example, the torque wrench 100 includes a vibration device 610 to provide the tactile signal. Upon the at least one processing circuit 600 determining the calibration count exceeds the calibration threshold, the at least one processing circuit 600 may cause a signal to be sent to the vibration device 610 to emit a tactile response. The audio signal, the visual signal, and the tactile signal may be used in combination or separately (e.g., the torque wrench 100 may include both the speaker 606 and the display 236 to provide the audio signal and the visual signal simultaneously or in conjunction with one another). In various embodiments, the calibration count may reset after an action is performed on the torque wrench 100. For example, the calibration count can reset after a manufacturer of the torque wrench 100 services (e.g., calibrates, fixes, replace parts of, etc.) the torque wrench 100.

The at least one processing circuit 600 may also be configured to provide a second indication to the user of the torque wrench 100. For example, in response to determining that the current torque output value exceeds the torque threshold, the at least one processing circuit 600 can provide the second indication. As described herein with reference to the first indication, the second indication can be at least one of an audio signal, a visual signal, or a tactile signal. Additionally, the second indication can be different from the first signal (e.g., the first indication is a tactile signal, and the second indication is an audio signal). The second indication can also be different from the first signal such that a type of the signal (e.g., audio, visual, tactile) is the same but an outcome is different. For example, the first indication and the second indication can be both be the audio signal; however, the first indication can be a beeping sound and the second indication can be a clicking sound.

### III. Example Operations of Torque Wrenches

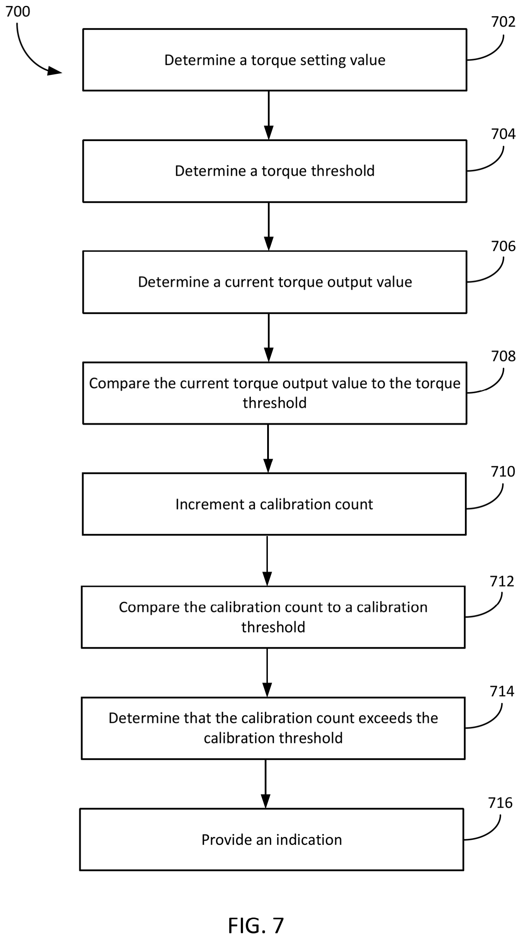

Figure 7 depicts a method 700 for operating the torque wrench 100. The method 700 includes receiving, by the at least one processing circuit 600, a torque setting value at step 702. The torque setting value, as described herein, can be set by adjusting the handle 102 and the sensor 238 can be configured to sense the adjustment of the handle 102 to determine the torque setting value.

The method 700 includes determining, by the at least one processing circuit 600, a torque threshold at step 704. The torque threshold can be determined based on the torque setting value determined at step 702. In various embodiments, the torque threshold is a fixed value dependent on a maximum torque setting value of the torque wrench 100. In various embodiments, the torque threshold is a dynamically changing value based on the torque setting value such that the torque threshold is not fixed as the torque setting value is adjusted. In such embodiments, the dynamically changing value is between 105% of the torque setting value and 115% of the torque setting value, inclusive.

In various embodiments, the method 700 further includes providing, by the at least one processing circuit 600, a display signal to the display 236 of the torque wrench 100. The display 236 can be configured to display information on the torque wrench 100. The display signal includes information according to a state of the torque wrench 100. The display signal can cause the display 236 to depict the torque setting value. Additionally, in such embodiments, the method includes displaying, by the display 236, the torque setting value responsive to the display 236 receiving the display signal. As utilized herein, "responsive" indicates that one event happens after another, with a period time elapsing between the events that is tailored to the events and a target configuration of the torque wrench 100.

The method 700 also includes determining, by the at least one processing circuit 600, a current torque output value at step 706. The processing circuit 600 can receive a signal from the sensor 238 that corresponds to a current torque output value. For example, when torque is applied to a component, the sensor 238 can detect a force that is processed to determine the current torque output value.

The method 700 includes comparing, by the at least one processing circuit 600, the current torque output value to the torque threshold at step 708. At step 710, a calibration count is incremented by the at least one processing circuit 600. Step 710 occurs in response to the current torque output value exceeding the torque threshold. The calibration count represents a number of times that the current torque output value has exceeded the torque threshold. In embodiments where the torque threshold changes (e.g., dynamically, etc.), the same calibration count is utilized for all torque thresholds. In various embodiments, the method further includes the at least one processing circuit 600 providing a calibration signal that is associated with the calibration count to the display 236. The display 236 can display the calibration count responsive to receiving the calibration signal.

The method 700 also includes comparing, by the at least one processing circuit 600, the calibration count to a calibration threshold at step 712. Step 712 aids in determining when the calibration count exceeds the calibration threshold. The calibration threshold defines a number of times the current torque output value exceeds the torque threshold in which an action is necessary (e.g., servicing of the torque wrench 100, replacement of the torque wrench 100, etc.). In various embodiments, the calibration threshold may be set by a manufacturer of the torque wrench 100.

The method 700 includes determining, by the at least one processing circuit 600, that the calibration count exceeds the calibration threshold at step 714. In response to the calibration count exceeding the calibration threshold at step 714, the at least one processing circuit 600 provides an indication to a user of the torque wrench 100 at step 716. The indication is in regard to the calibration count exceeding the calibration threshold of the torque wrench 100. In various embodiments, the indication is at least one of an audio signal, a visual signal, or a tactile signal. As described herein, in reference to the first indication, the torque wrench 100 may have components (e.g., the speaker 606, the light 608, the vibration device 610, the display 236) to facilitate providing the indication. For example, the at least one processing circuit 600 can provide an indication signal that is associated with the indication to the display 236. The display 236 can display the indication responsive to receiving the indication signal. The audio signal, the visual signal, and the tactile signal may be used in combination or separately (e.g., the torque wrench 100 may include both the speaker and the display 236 to provide the audio signal and the visual signal, etc.).

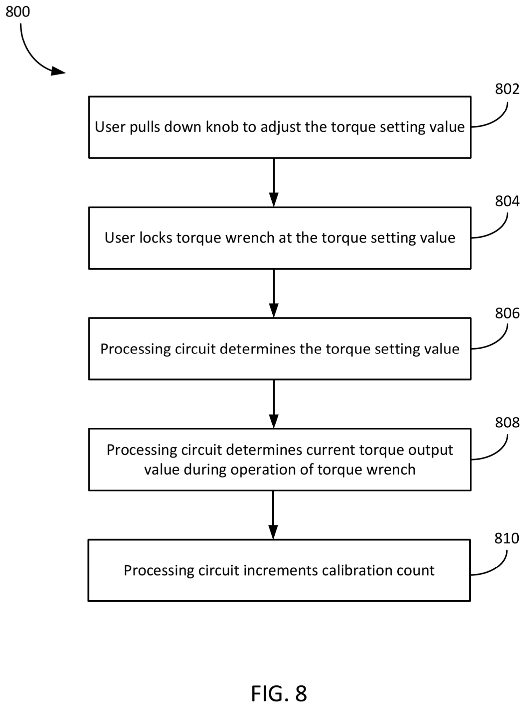

Figure 8 depicts an example method 800 for operating the torque wrench 100. A user of the torque wrench 100 moves the knob 108 to adjust the torque setting value at step 802. As described herein, the knob 108 may be a part of the torque wrench 100 in order to facilitate rotation of the handle 102 to adjust the torque setting value.

The method 800 also includes locking the torque wrench 100 at the torque setting value. As described herein with reference to the handle 102, the knob 108 can be used to lock the torque wrench 100 at the torque setting value by restricting movement of the handle 102. The torque setting value is determined by the at least one processing circuit 600 at step 806 in a manner similar to described in reference to step 702.

The method 800 also includes the at least one processing circuit 600 determining the current torque output value of the torque wrench 100. As described in reference to step 706 of method 700, the at least one processing circuit 600 may receive a signal from the sensor 238 that corresponds to the current torque output value. Upon determining that the current torque output value exceeds a torque threshold, the at least one processing circuit 600 increments a calibration count. The torque threshold is determined based on the torque setting value and may vary dependent on the torque setting value, a size of the torque wrench 100, components used in the torque wrench 100, etc.

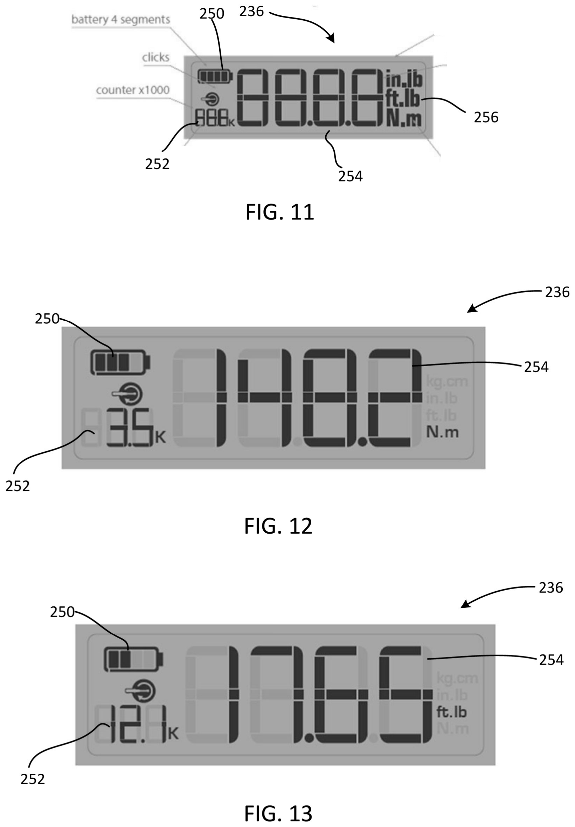

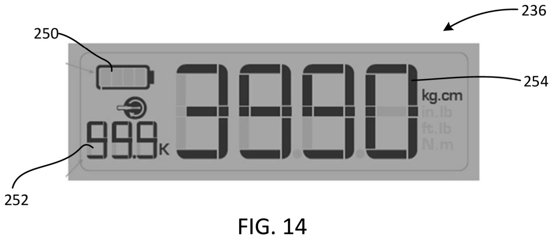

Figures 11-14 depict example states of the display 236 for the torque wrench 100. Figures 11-14 show the display 236 during successive use of the torque wrench 100 at different setting uses. As shown in Figure 11, the display 236 includes a number of torque units 256 that can be used during use of the torque wrench 100. Figures 12-14 display uses of the torque wrench 100 at different torque units 256. As shown in Figures 11-14 and described herein, the display 236 may receive signals from the at least one processing circuit 600 to display information related to the torque wrench 100. For example, the display 236 can receive a first signal corresponding to battery level of the torque wrench 100 and a battery level 250 may be displayed on the display 236. Figure 11 shows the battery level 250 at a full charge (i.e., bars on the battery level 250 are filled in). Figures 12 and 13 show the battery level 250 with a depleting battery charge while Figure 14 shows the battery level 250 at a full loss of charge. Additionally, the display 236 can receive a calibration signal associated with the calibration count and a calibration count 252 can be displayed on the display 236. In various embodiments, as shown in Figures 11-14, the calibration count 252 can be displayed by thousands, represented by a "K" at the calibration count 252. As a number of uses of the torque wrench 100 increases, the calibration count 252 increases, shown through the successive uses of the torque wrench 100 from Figures 12-14. The display 236 may receive a signal corresponding to the current torque output value for a current torque output value 254 to be displayed. The current torque output value 254 can dynamically change in real-time as a user adjusts a torque applied to a component. As described herein, an indication signal may be received by the display 236 such that the indication is displayed on the display 236 (e.g., blinking LED lights, text on the display 236, etc.).

### IV. Configuration of Example Embodiments

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the terms "substantially," "generally," "approximately," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be in the scope of the appended claims.

The term "coupled" and the like, as used herein, mean the joining of two components directly or indirectly to one another. Such joining may be stationary (e.g., permanent) or moveable (e.g., removable or releasable). Such joining may be achieved with the two components, or the two components and any additional intermediate components being integrally formed as a single unitary body with one another, with the two components, or with the two components and any additional intermediate components being attached to one another.

It should be understood that the controller may include any number of circuits for completing the functions described herein. For example, the activities and functionalities of the processing circuit 600 may be combined in multiple circuits or as a single circuit. Additional circuits with additional functionality may also be included. The processing circuit 600 may further control other activity beyond the scope of the present disclosure.

While the term "processor" is briefly defined above, the term "processor" and "processing circuit" are meant to be broadly interpreted. In this regard and as mentioned above, the "processor" may be implemented as one or more processors, application specific integrated circuits (ASICs), field programmable gate arrays (FPGAs), digital signal processors (DSPs), or other suitable electronic data processing components structured to execute instructions provided by memory. The one or more processors may take the form of a microprocessor, etc.

It is important to note that the construction and arrangement of the various systems shown in the various example implementations is illustrative only and not restrictive in character. All changes and modifications that come in the spirit and/or scope of the described implementations are desired to be protected. It should be understood that some features may not be necessary, and implementations lacking the various features may be contemplated as in the scope of the disclosure, the scope being defined by the claims that follow. When the language "a portion" is used, the item can include a portion and/or the entire item unless specifically stated to the contrary.

Also, the term "or" is used, in the context of a list of elements, in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Additionally, the use of ranges of values (e.g., W1 to W2, etc.) herein are inclusive of their maximum values and minimum values (e.g., W1 to W2 includes W1 and includes W2, etc.), unless otherwise indicated. Furthermore, a range of values (e.g., W1 to W2, etc.) does not necessarily require the inclusion of intermediate values in the range of values (e.g., W1 to W2 can include only W1 and W2, etc.), unless otherwise indicated.

## Claims

1. A torque wrench comprising:
a sensor; and
at least one processing circuit coupled to the sensor, the at least one processing circuit configured to:
determine a torque setting value;
determine a torque threshold based on the torque setting value;
determine a current torque output value of the torque wrench based on a signal from the sensor;
compare the current torque output value to the torque threshold;
responsive to determining that the current torque output value exceeds the torque threshold, increment a calibration count;
compare the calibration count to a calibration threshold; and
responsive to determining that the calibration count exceeds the calibration threshold, provide a first indication to a user regarding the calibration count exceeding the calibration threshold.

2. The torque wrench of claim 1, further comprising:
a handle;
a center shaft comprising a center shaft interior portion disposed within the handle; and
an output shaft assembly comprising:
a coupler comprising a threaded shaft and a post, the threaded shaft disposed within the center shaft interior portion, the post coupled to the handle,
a threaded seat disposed within the center shaft interior portion, the threaded seat comprising a threaded opening threadably coupled to the threaded shaft,
an output shaft having an output shaft interior portion disposed within the handle, the output shaft coupled to the center shaft such that movement of the output shaft causes movement of the center shaft, and
a spring, a portion of the spring disposed within the center shaft interior portion between the output shaft interior portion and the threaded seat and configured such that rotation of the handle causes rotation of the coupler relative to the center shaft, movement of the threaded seat relative to the coupler, and a change in a compression of the spring;
wherein the sensor contacts a portion of the output shaft assembly; and
wherein the signal is associated with the compression of the spring.

3. The torque wrench of claim 2, further comprising a knob operable between a first knob position and a second knob position, the knob rotatable relative to the handle in the first knob position, the knob coupled to the handle such that movement of the knob causes movement of the handle in the second knob position, wherein the knob is preferably configured to alter the torque setting value upon rotation of the knob in the first knob position.

4. The torque wrench of any of the preceding claims, wherein the torque threshold is a dynamically changing value based on the torque setting value, wherein the dynamically changing value is preferably between 105% of the torque setting value and 115% of the torque setting value, inclusive.

5. The torque wrench of any of the preceding claims, further comprising a display coupled to the at least one processing circuit, wherein the at least one processing circuit is further configured to provide a display signal to the display that causes the display to depict the torque setting value, wherein the display is preferably configured to selectively display the calibration count.

6. The torque wrench of any of the preceding claims, wherein the first indication is at least one of an audio signal, a visual signal, or a tactile signal.

7. The torque wrench of any of the preceding claims, wherein the at least one processing circuit is further configured to, responsive to determining that the current torque output value exceeds the torque threshold, provide a second indication to the user, wherein the second indication is preferably different from the first indication, and wherein the first and second indications are preferably at least one of an audio signal, a visual signal, or a tactile signal.

8. A method for operating a torque wrench having a sensor and at least one processing circuit coupled to the sensor, the method comprising:
determining, by the at least one processing circuit, the at least one processing circuit of the torque wrench, a torque setting value;
determining, by the at least one processing circuit, a torque threshold based on the torque setting value;
determining, by the at least one processing circuit, a current torque output value of the torque wrench;
comparing, by the at least one processing circuit, the current torque output value to the torque threshold;
incrementing, by the at least one processing circuit, a calibration count responsive to determining that the current torque output value exceeds the torque threshold;
comparing, by the at least one processing circuit, the calibration count to a calibration threshold;
determining, by the at least one processing circuit, that the calibration count exceeds the calibration threshold; and
responsive to determining that the calibration count exceeds the calibration threshold, providing, by the at least one processing circuit, an indication to a user regarding the calibration count exceeding the calibration threshold.

9. The method of claim 8, wherein the indication is at least one of an audio signal, a visual signal, or a tactile signal.

10. The method of claim 8 or 9, further comprising:
providing, by the at least one processing circuit, a display signal to a display of the torque wrench that causes the display to depict the torque setting value; and
displaying, by the display, the torque setting value responsive to the display receiving the display signal.

11. The method of claim 10, further comprising:
providing, by the at least one processing circuit, a calibration signal to the display, the calibration signal associated with the calibration count; and
displaying, by the display, the calibration count responsive to the display receiving the calibration signal.

12. The method of claim 10 or 11, further comprising:
providing, by the at least one processing circuit, an indication signal to the display, the indication signal associated with the indication; and
displaying, by the display, the indication responsive to the display receiving the indication signal.

13. The method of any of claims 8 to 12, wherein the torque threshold is a dynamically changing value based on the torque setting value, wherein the dynamically changing value is preferably between 105% of the torque setting value and 115% of the torque setting value, inclusive.

14. A torque wrench comprising:
a handle;
an output shaft assembly comprising a spring, the output shaft assembly coupled to the handle so as to facilitate compression of the spring relative to the handle;
a sensor configured to provide a signal associated with force provided by the spring; and
at least one processing circuit coupled to the sensor, the at least one processing circuit configured to:
determine a torque setting value of the torque wrench based on the signal;
determine a torque threshold based on the torque setting value;
after determining the torque threshold, determine a current torque output value of the torque wrench based on the signal;
compare the current torque output value to the torque threshold;
responsive to determining that the current torque output value exceeds the torque threshold, increment a calibration count;
compare the calibration count to a calibration threshold; and
responsive to determining that the calibration count exceeds the calibration threshold, provide an indication to a user regarding the calibration count exceeding the calibration threshold.

15. The torque wrench of claim 14, further comprising a display coupled to the at least one processing circuit, wherein the at least one processing circuit is further configured to provide a at least one signal to the display that causes the display to depict at least one of the current torque output value, the calibration count, and the indication.
